# EUROPEAN PATENT APPLICATION

(11) **EP 4 647 803 A1**
(43) Date of publication of application: **12.11.2025**
(21) Application number: 25170476.3
(22) Date of filing: 14.04.2025
(51) Int. Cl.: G01S 7/24, B64D 43/00, G01S 13/95, G02B 27/01

(54) **SYSTEM & PROCESS FOR DISPLAYING HAZARD DATA DETECTED BY ONBOARD WEATHER SENSOR ON HEADS UP DISPLAY**

(30) Priority: 07.05.2024 IN 202411036116; 06.08.2024 US 202418796122
(71) Applicant: Honeywell International Inc., Charlotte, NC 28202 (US)
(72) Inventor: KODURU, Anantha Chandrasekhar, Charlotte, 28202 (US); EBSV, Charan, Charlotte, 28202 (US); BUNCH, Brian P., Charlotte, 28202 (US); ARMSTRONG, David, Charlotte, 28202 (US)
(74) Representative: Haseltine Lake Kempner LLP

(57) **Abstract**

A system, device, and process to generate symbology to display weather and non-weather hazards on the heads up display (HUD) based on information gathered and analyzed by a weather radar is described. The techniques of this disclosure may enable the pilot to gain safety information about weather and non-weather information collected by the weather radar by looking at the HUD rather than switching their attention between look down displays and HUDs.

## Description

This application claims priority to Indian Provisional Patent Application No. 202411036116, entitled "SYSTEM & PROCESS FOR DISPLAYING HAZARD DATA DETECTED BY ONBOARD WEATHER SENSOR ON HEADS UP DISPLAY" and filed on May 07, 2024, the entire content of which is incorporated herein by reference.

### TECHNICAL FIELD

The disclosure relates to display systems, specifically to heads up displays.

### BACKGROUND

Some aircraft include heads up display (HUD) systems that give pilots a view of flight information without having to look down at the instrument panel. A HUD presents flight information onto a transparent screen positioned in front of a pilot's line of sight, which may increase situational awareness and enhancing safety. Some examples of information on a HUD display include airspeed, altitude, a horizon line, heading, turn/bank and slip/skid indicators. A HUD may overlay the real-world scene in front of the aircraft with symbology that is superimposed over the visual scene, which may display instantaneous inertial flight path information for the pilot. Some examples of HUD systems may also superimpose synthetic vision on the HUD. A HUD may be implemented using, for example, cathode ray tubes (CRT), liquid crystal displays (LCD) or similar display technology. Some examples of HUD may be implemented as monochrome, while other examples may include some color.

### SUMMARY

In general, the disclosure describes systems and devices that generate and display information detected by radar, including weather radar, on a heads up display (HUD). Some examples of weather radar systems may detect not only the information including weather hazards like wind shear, turbulence, convective weather, hail, lightning and similar weather hazards, but may also detect the non-cooperative hazards like unmanned aerial vehicles (UAV), a bird or a flock of birds, volcanic ash and other non-weather hazards. The systems of this disclosure may generate symbology to inform the flight crew of such hazards and display weather and non-weather hazards on the HUD. The systems of this disclosure may enable the pilot to gain safety information by looking at the HUD rather than switching between look down displays and the HUD. In this manner the techniques of this disclosure may help pilots to get a comprehensive situational awareness just by looking at the HUD, which may, for example, show runway alignment, weather hazards, and terrain related aspects. The systems of this disclosure may also display these hazards on look down displays, such as a primary flight display (PFD), multi-function flight display (MFD), dedicated weather radar display, and similar displays.

In one example, this disclosure describes a system comprising a weather radar configured to: gather information about a region of three-dimensional space that includes a flight path of an aircraft; and output the gathered information; a heads up display (HUD) configured to: receive data comprising the gathered information from the weather radar; and display symbology on the HUD based on the gathered information from the weather radar.

In another example, this disclosure describes a non-transitory computer-readable storage medium instructions that, when executed, cause processing circuitry of a computing device to receive information about a region of three-dimensional space, wherein the information is based on radar returns from a weather radar, and wherein the region of three-dimensional space comprising a flight path of an aircraft; generate symbology configured to be displayed on a heads up display (HUD) of the aircraft, wherein the symbology is based on the received information; and display the symbology on the HUD.

In another example, this disclosure describes a method comprising receiving, by processing circuitry of an aircraft, information about a region of three-dimensional space, wherein the information is based on radar returns from a weather radar onboard the aircraft, and wherein the region of three-dimensional space comprising a flight path of the aircraft; generating, by the processing circuitry, symbology configured to be displayed on a heads up display (HUD) of the aircraft, wherein the symbology is based on the received information; and displaying the symbology on the HUD.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example system that includes a HUD configured to receive and display information from a weather radar.
FIG. 2 is a conceptual diagram illustrating an example aircraft as well as both HUD and look down displays.
FIG. 3 is a conceptual diagram illustrating an example HUD, as seen from the perspective of a flight crew member of an aircraft.
FIGS. 4A and 4B are conceptual diagrams illustrating an example transmit beam and a plurality of example receive beams, which may be generated by some examples of weather radar systems of this disclosure.
FIG. 5 is a flow chart illustrating an example operation of a system configured to display information on a HUD according to one or more techniques of this disclosure.

### DETAILED DESCRIPTION

The systems of this disclosure generate symbology to display weather and non-weather hazards on heads up display (HUD). Other examples of HUD may display flight information, navigation information and terrain information to the pilot. The systems of this disclosure may enable the pilot to gain safety information about weather and non-weather information collected by a weather radar by looking at the head up display rather than switching between look down displays and head up display.

Some examples of weather radar systems may detect not only the information including weather hazards like wind shear, turbulence, convective weather, hail, lightning and similar weather hazards, but may also detect the non-cooperative hazards like unmanned aerial vehicles (UAV), a bird or a flock of birds, volcanic ash and other non-weather hazards. The systems of this disclosure may generate symbology to inform the flight crew of such hazards and display weather and non-weather hazards on the HUD. The systems of this disclosure may enable the pilot to gain safety information by looking at the HUD rather than switching between look down displays and the HUD. In this manner the techniques of this disclosure may help pilots to get a comprehensive situational awareness just by looking at the HUD, which may, for example, show runway alignment, weather hazards, and terrain related aspects. The systems of this disclosure may also display these hazards on look down displays, such as a primary flight display (PFD), multi-function flight display (MFD), dedicated weather radar display, and similar displays.

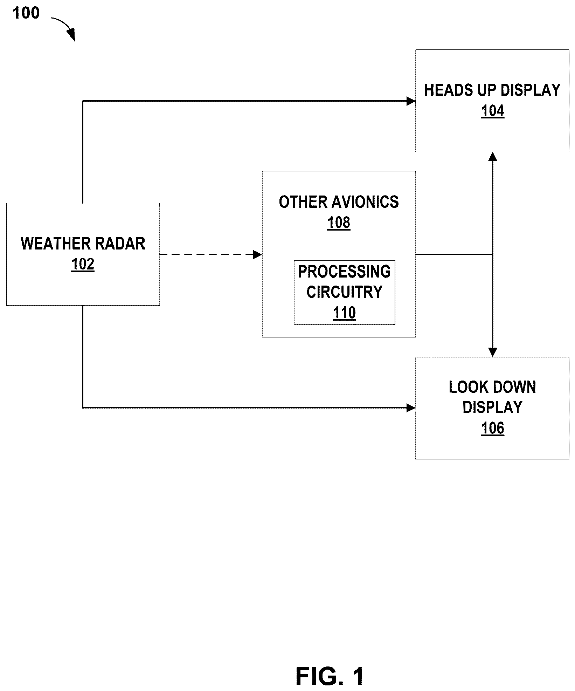

FIG. 1 is a block diagram illustrating an example system that includes a HUD configured to receive and display information from a weather radar. System 100, in the example of FIG. 1, may be installed onboard an aircraft (not shown in FIG. 1). System 100 includes weather radar 102, other avionics 108, HUD 104 and look down display 106. The aircraft, also referred to as an "own-ship" or own-ship aircraft in this disclosure, may include many additional systems and components than shown in FIG. 1.

Weather radar 102 may be a weather radar system that may include processing circuitry and a memory as well as a weather radar antenna (not shown in FIG. 1) configured to transmit a radar signal and receive the reflected radar returns. In some examples, weather radar 102 may transmit a "pencil" beam in a pattern over the radar field of view (FOV), such as a raster pattern. In other examples, weather radar 102 may transmit a high aspect ratio beam and sweep the beam in the azimuth direction. The high aspect ratio beam may be wider in the elevation direction and narrower in the azimuth direction. In some examples, the weather radar antenna may be mounted on a gimbaled mount and mechanically moved to point the radar transmit beam. In other examples, the weather radar antenna may use a phase shift, or other electronic means to point the radar transmit beam. In other examples, the weather radar antenna may use a combination of mechanical and electronic means to aim the radar transmit beam.

Weather radar 102 may gather information for a region of three-dimensional space that includes a flight path of the aircraft. In some examples, onboard weather radar may scan and collect weather information in the FOV up to 300 or more nautical miles (nm) ahead and around an aircraft in flight and display this information to the flight crew in the cockpit.

In some examples, weather radar 102 may include a dedicated user interface including controls and a display, where "dedicated" means the weather radar user interface is only used to interact with the weather radar. In other examples, weather radar 102 of this disclosure may be equipped to send collected weather to other systems onboard, such as other avionics 108, directly to HUD 104 and look down display 106.

A technical differentiator from other weather radar includes that weather radar 102 may have connectivity to other systems of the aircraft and the ability to provide weather cell trending and tracking data, as well as forecasts, in real-time operation. In addition, system 100 may provide the aircraft flight path in three dimensions along with a comparison to the weather data during the flight. Similarly weather radar 102 may collect, analyze and display non-weather information in three dimensions. Said another way, weather radar 102 may collect and analyze information based on received radar returns and develop a 3D volumetric representation of weather and non-weather objects and events. Weather radar 102 may be configured to output a two dimensional representation of the 3D information on look down display 106, where look down display 106 includes a dedicated look down display, as well as other look down displays such as a primary flight display (PFD) and multi-function display (MFD).

Weather radar 102 of this disclosure may also output information to HUD 104. In some examples, HUD 104 may use separate HUD processing circuitry (not shown in FIG. 1) to receive the information and generate and output HUD symbology to the flight crew on HUD 104.

Some non-limiting examples of weather information gathered by weather radar 102 may include a gust front. A gust front is the leading edge of gusty surface winds from thunderstorm downdrafts; sometimes associated with a shelf cloud or roll cloud. May also be referred to as an outflow boundary. Other examples of weather information may include a thunderstorm, including direction relative to the aircraft's course and the stage of the thunderstorm, based on characteristics of the radar returns, such as reflectivity. In the mature stage, there are both updrafts and downdrafts present. The beginning of rainfall signals the beginning of the mature stage, which may be the most dangerous stage of a thunderstorm. Pilots can experience lightning, severe turbulence, wind gusts, and even hail. Hail has been observed to travel more than 20 nautical miles from a storm. In the dissipating stage, the storm may produce significant downdrafts resulting in sudden altitude loss.

The downward moving column of air in a typical thunderstorm is large. The resultant outflow may produce wind shear, and in some cases the most severe type of wind shear, the microburst. A microburst is a small-scale, intense downdraft that when reaching the surface, spreads outward in all directions from the downdraft center. In some examples, virga, streaks of precipitation falling from a thunderstorm cloud but not reaching the ground, may precede a microburst.

Examples of non-weather hazards may include volcanic ash, dust or smoke, as well as non-cooperative hazards such as unmanned aerial vehicles (UAV), and bird flocks. Weather radar 102 may analyze the radar returns and determine information such as a location, movement relative to the aircraft, and track prediction for any of the weather or non-weather hazards and other phenomena.

Other avionics 108 may include any one or more of a flight management system (FMS), communications equipment, navigation equipment, collision avoidance electronics, aircraft environmental and engine control electronics and similar equipment. In some examples, weather radar 102 may connect to HUD 104 or to one or more look down displays through avionics 108. In other examples, weather radar 102 may be operatively connected directly to HUD 104 and/or look down displays 106.

Avionics 108 may include processing circuitry 110. Any one or more of HUD 104, look down displays 106 and weather radar 102 may also include processing circuitry to perform the functions of those components (not shown in FIG. 1). Examples of processing circuitry 110, as well as any processing circuitry in system 100, may include any one or more of a microcontroller (MCU), e.g., a computer on a single integrated circuit containing a processor core, memory, and programmable input/output peripherals, a microprocessor (µP), e.g., a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry.

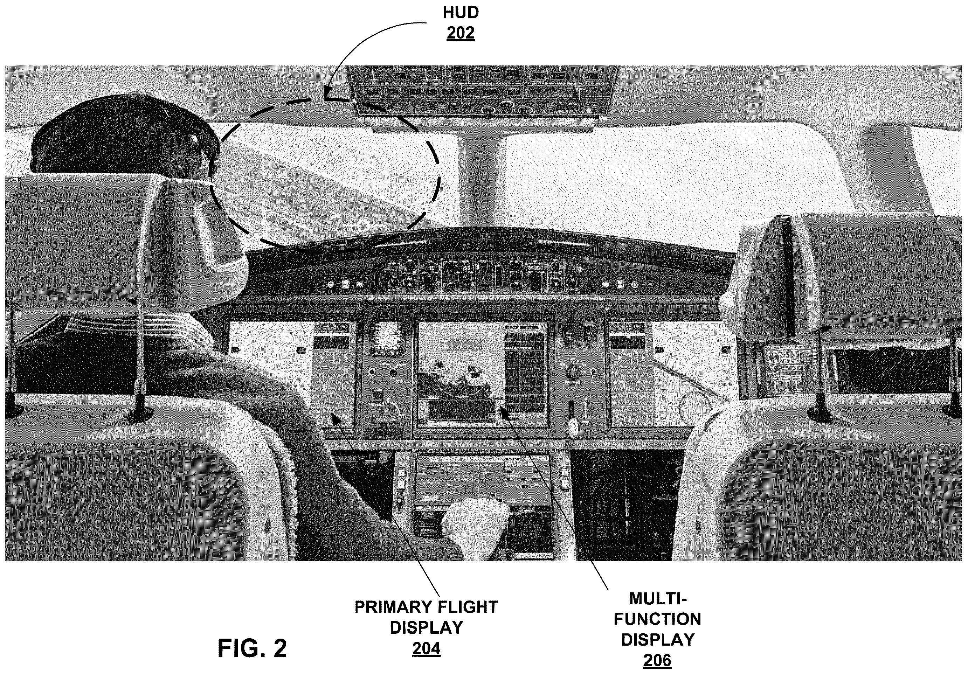

FIG. 2 is a conceptual diagram illustrating an example aircraft as well as both HUD and look down displays. The example of FIG. 2 includes HUD 202, as well as look down displays such as primary flight display 204 and multi-function display 206. As described above in relation to FIG. 1, the system of this disclosure, that includes a weather radar such as weather radar 102, may display weather and non-weather information on any of the look down displays of FIG. 2. In addition, the weather radar of this disclosure may output information to HUD 202 to cause HUD 202 to display HUD symbology indicating weather, and non-weather, information to the flight crew (not shown in FIG. 2). The symbology may indicate a location relative to the aircraft as well as movement relative to the aircraft for the weather and non-weather information.

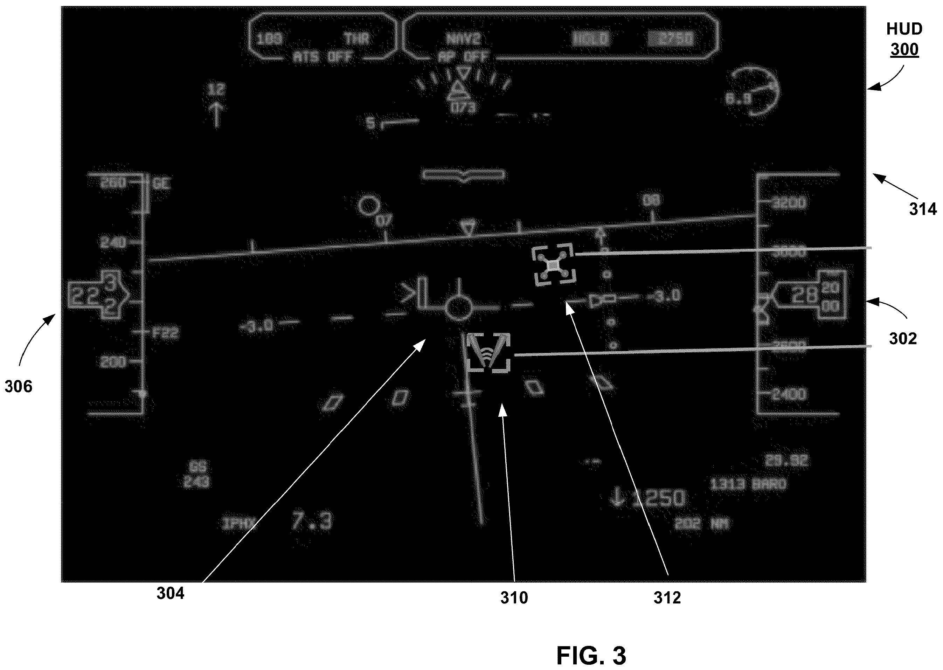

FIG. 3 is a conceptual diagram illustrating an example HUD, as seen from the perspective of a flight crew member of an aircraft. As described above in relation to FIGS. 1 and 2, HUD 300 may be positioned on a transparent screen, or similar device, in the view of the flight crew, e.g., a pilot, to give pilots a view of flight information without having to look down at the instrument panel or other displays. In some examples, HUD 300 may be located on a transparent screen of a helmet, or similar headgear, worn by a flight crew member.

In addition to flight information, the system of this disclosure may output information gathered by the weather radar and output the gathered weather and non-weather information to HUD 300. Examples of flight information displayed by HUD 300 may include speed tape 306, which shows the own ship aircraft speed, attitude indicator 304, which displays the aircraft attitude in relation to the horizon, and may also show a flight path vector indicator, and altitude tape 302. In some examples, HUD 300 may be configured to receive user input to adjust the display symbology on the HUD, e.g., adjust which hazards to display and filter out information from the weather radar that the flight crew would prefer to view on a look down display.

HUD 300 may also display symbology based on the gathered information from the weather radar. In the example of FIG. 3, HUD 300 displays symbology that indicates the location, relative to the aircraft, of wind shear 310 and UAV 312. In some examples, the symbology may also indicate movement relative to the aircraft, and track prediction. Lead line 314 on UAV 312 may indicate a direction and velocity relative to an own ship course and speed. In some examples, the symbology for UAV 312 may be used to indicate other types of unmanned vehicles such as unmanned aerial systems (UAS) and urban air mobility (UAM). In other examples, different symbology may be used for different types of unmanned aircraft.

As described above in relation to FIGS. 1 and 2, other symbology (not shown in FIG. 3) may indicate location and relative motion of other non-weather hazards and weather conditions such as turbulence, a thunderstorm, a gust front, icing conditions, a microburst, lightning inference, downdrafts or and similar information.

The system of this disclosure may provide advantages over other systems including to enable the pilot to gain safety information by looking at HUD 300 rather than switching between look down displays and HUD 300. In this manner, a pilot may get a comprehensive situational awareness just by looking at the head up displays e.g., runway alignment (through the window and HUD 300 as depicted in FIG. 2), weather hazards, terrain related aspects and similar information.

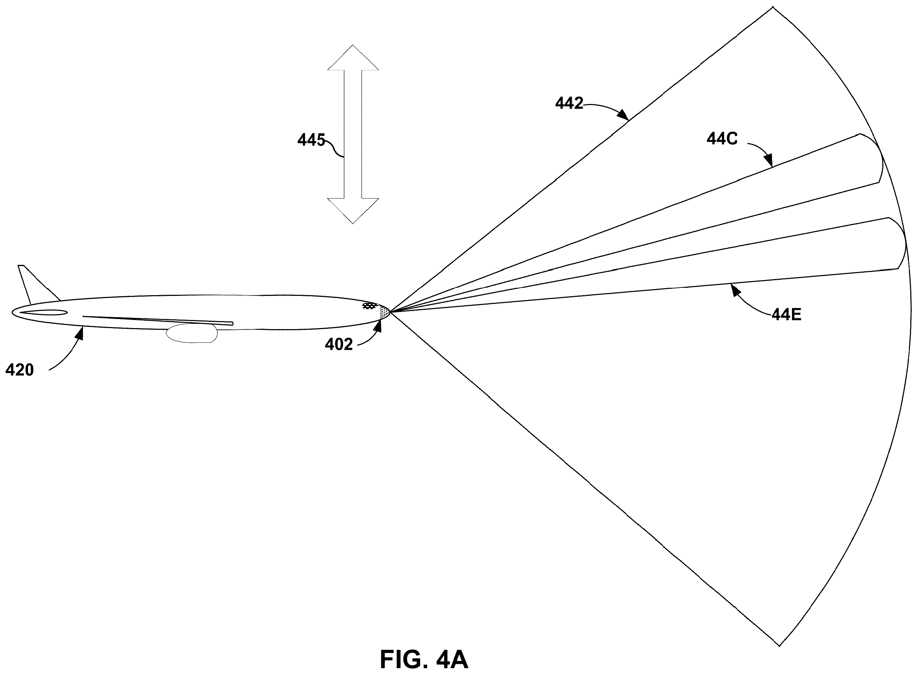

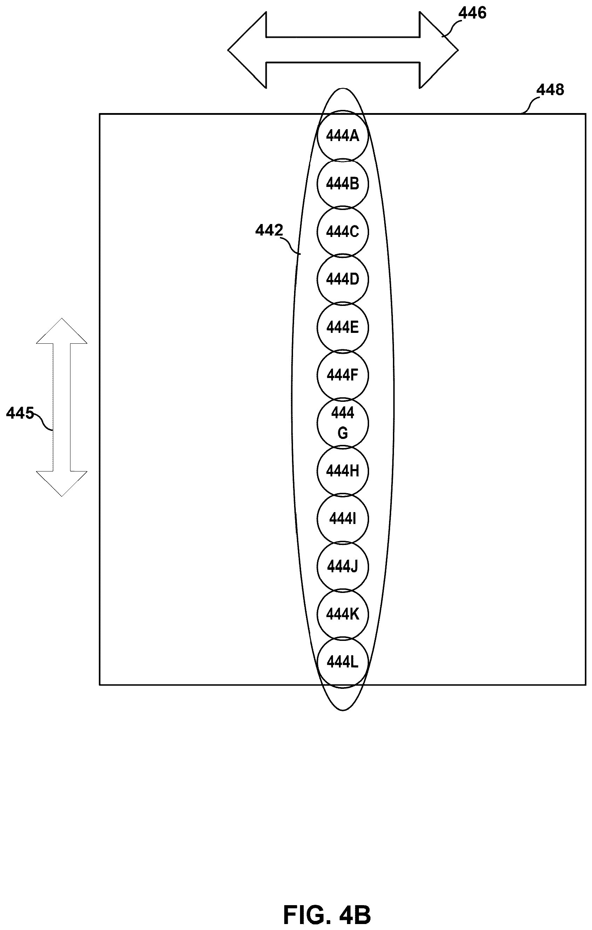

FIGS. 4A and 4B are conceptual diagrams illustrating an example transmit beam 442 and a plurality of example receive beams 444A-444L, which may be generated by a weather radar system of this disclosure. In other examples, a weather radar system according to this disclosure may transmit and scan a "pencil beam" to cover the field of regard of the weather radar. Weather radar 402 is an example of weather radar 102 described above in relation to FIG. 1 and may have the same functions and characteristics.

In the example of FIGS. 4A and 4B, transmit beam 442 is depicted as being approximately elliptical in shape, with a greater extent in elevation than in azimuth. FIG. 4B also depicts a representation of a predetermined area 448, which may be referred to as a field of regard (FOR), which is to be illuminated by weather radar 402. As shown in FIG. 4B, transmit beam 442 may be at least as tall in elevation as the elevation of predetermined area 448, such that transmit beam 442 illuminates the entire elevation of a section of predetermined area 448 without steering or scanning transmit beam 442 in elevation. In other examples, transmit beam 442 may be wide in azimuth and short in elevation. In general, transmit beam 442 may have a greater extent in a first illumination direction 445 than in a second illumination direction 446 substantially perpendicular to the first illumination direction 445. In other words, the transmit beam has a high aspect ratio, which in some examples is at least 10:1. In the example of FIG. 4A, the first illumination direction is the vertical beamwidth and the second illumination direction is the horizontal beamwidth.

In the example of a weather radar mounted on an aircraft, as depicted in FIG. 4A, where the aircraft is flying at a normal cruising altitude of approximately 30,000 feet (8000 to 10,000 meters), the transmit beam in the first illumination direction 445 may reflect from targets or weather on the ground and as high as the troposphere without scanning in elevation. In other words, at a given point in time, transmit beam 442 may simultaneously transmit radar energy from weather radar 402 to illuminate the entire vertical dimension of predetermined area 448 in the first illumination direction 445.

In contrast to a raster scan pencil beam, in the example in which weather radar 402 uses a high-aspect ratio beam, weather radar 402 may sweep transmit beam 442 in azimuth only and thus illuminate predetermined area 448 more quickly. As a result, a radar system according to the techniques of this disclosure may allow transmit beam 442 to be available to concentrate on storms vertically and to scan over a limited azimuth extent with full instantaneous vertical extent. Some advantages may include providing a coherent weather picture of certain weather systems, such as a thunderstorm that may extend for thousands of feet in altitude. For example, radar energy in transmit beam 442 transmitted at a given time may simultaneously illuminate a sub-region of predetermined area 448.

Receive electronics of weather radar 402 may electronically generate the plurality of receive beams 444. Receive electronics may be configured to generate receive beams using digital beam forming (DBF) signal processing. In other words, the receive beams are only within the signal processing circuitry of weather radar 402 and are not transmitted external to weather radar 402. Said another way, for the receive beams, the radar energy from transmit beam 442 reflects from objects in predetermined area 448. Objects may be ice crystals, precipitation, other aircraft, ground-based features, birds, and other objects. The reflected energy arrives weather radar 402. The received radar signals from each receive element are processed, e.g., phase shifted, summed and/or combined to electronically form beams within weather radar 402. This electronic beam forming occurs within the circuits, processors, and other components of weather radar 402.

In some examples, a weather search mode, weather radar 402 when implemented with a high aspect ratio transmit beam, may execute a single azimuth pass of transmit beam 442 across the maximum and minimum of the azimuth range. A buffer memory, which may include three-dimensional (3-D) volumetric information, may be filled single azimuth pass at a range of over 320 nautical miles (NM). Weather radar 402 may collect and store a full vertical information of all storm or other weather structures in this single azimuth scan. During flight, the processing circuitry within weather radar 402 on aircraft 420 may assemble a mapping of reflectivity characteristics in the first illumination direction. For example, a main indicator in the detection of high altitude ice crystals (HAIC) and high ice water content (HIWC) may be based on the integrated vertical reflectivity of the storm.

When implemented as a pencil beam radar, weather radar 402 may use a raster pattern, or other pattern to collect data for the entire region in front of the aircraft. Assembling a raster scan of the data may include adjustments for radar beam transmission time and aircraft position, as described above. For example, a pencil beam radar may have to account for changes in range gates, angular changes, and other decorrelation issues caused by the movement of the aircraft during the scan.

In an enhanced weather mode, weather radar 402 may use additional time to perform additional weather analysis. For example, after the full azimuth scan, weather radar 402 may return to locations of storm cells, or other detected weather, to dwell for several frequency modulation periods. Other enhanced weather functions may include additional scans of one or more storm cell regions, change modulation waveforms for Doppler or other measurements, use the receive beams to capture details of one or more storm cells from ground to maximum altitude. Weather radar 402 may use an extended dwell capability to repeat HAIC detections over a short period of seconds, or fraction of seconds to verify and validate the HAIC presence.

In some examples, during a dwell period, or during a sweep, weather radar 402 may adjust the modulation bandwidth or chirp time to optimize detection and analysis in various modes. The analysis may be done over discrete periods of time, which may be called epochs. For example, weather radar 402 may cause the transmit beam to dwell at an azimuth for a ten millisecond epoch, while changing the modulation scheme in two millisecond intervals to optimize certain functions or modes.

In addition to the weather radar functions, the high aspect ratio transmit beam 442 may provide additional functions for vehicles in which weather radar 402 is installed. In the example of an aircraft, weather radar 402 may use the plurality of receive beams 444 for analysis beyond weather analysis as well as execute different functions in different phases of flight. For example, lower receive beams may be used for terrain avoidance or terrain following applications while upper beams simultaneously provide airborne target detection or weather detection.

One example of analysis beyond weather analysis may include using the enhanced dwell capability of weather radar 402 in conjunction with multiple receive beams arrayed over the high aspect ratio transmit beam (e.g., 60 degrees of elevation) to detect volcanic ash. Weather radar 402 may discriminate between cloud and ash reflections via Doppler analysis over an extended period of time, such as one or more seconds. The extended dwell time may provide added signal processing gain for increased sensitivity to search for heavier and more detectable ash below the aircraft. When in the vicinity of known active volcanos, weather radar 402 may provide a dedicated scan of the volcano top and air above the volcano to detect possible volcanic eruptions where the ash is the most dense and therefore more detectable. In some examples, weather radar 402 may perform an optimization process on a waveform to improve range resolution and detection range based on distance to the volcano.

In some examples, weather radar 402 may combine radar signal information with a volcano location and height database as part of the terrain map capability. The signal processing in weather radar 402 may use multiple receive beams to establish ground level and multiple receive beamwidths to reduce azimuth sidelobe clutter from the ground.

In the example of aircraft 420 approaching for landing, weather radar 402 may the plurality of receive beams 444 for other functions. For example, receive beams 444I - 444L may function as monopulse receive beams to track objects on or near the ground. Collision avoidance characteristics of a sub-area may include range, bearing, tracking and size characteristics of an object in the sub-area including UAVs, bird flocks and other objects.

Additionally, weather radar 402 may assist the pilot in determining if there are hazards on the runway such as ground vehicles, barriers, debris, animals or other hazards. For example, on final approach to a runway, weather radar 402 may use one or more receive beams 444 to search the runway for intrusions by vehicles or other aircraft with a dedicated scan for this purpose. Weather radar 402 may use a waveform that may optimize range resolution and maximum detection range and monopulse mode for accurate angular resolution.

Simultaneously with receive beams 444I - 444L providing a navigation and ground hazards, receive beams 444A - 444C may continue to provide weather information during the approach of aircraft 420 to the airport above and beyond the runway. Receive electronics may generate receive beams 444A - 444C as FMCW receive beams to determine the one or more characteristics of a sub-areas within the receive beams. Characteristics such as reflectivity may help determine the weather and non-weather objects in the path of aircraft 420.

Simultaneously with receive beams 444I - 444L providing a ground picture and receive beams 444A - 444C providing weather information, other receive beams may provide collision avoidance, or other functions. For example, the receive electronics may generate receive beams 444D - 444H as monopulse receive beams to locate and track other aircraft, UAVs, birds, bats or other hazards to aircraft 420. In some examples, weather radar 402 may execute a dedicated azimuth scan focused around the runway approach region to detect UAVs, especially small UAVS. Upon detecting a possible UAV, weather radar 402 may use dedicated modulation waveforms and monopulse angle measurements to track the UAV. Similarly, weather radar 402 may use one or more beams in a dedicated scan to search for bird flocks, along with dedicated waveform, range settings and range resolution, while continuing to perform other radar functions described in this disclosure.

In some examples, weather radar 402 may use one or more of receive beams 444D - 444H to execute simultaneous predictive wind shear (PWS) analysis of the air mass between aircraft 420 and the approaching airport. In some examples, weather radar 402 may output signals to a synthetic vision system (SVS), which may be valuable in a degraded visibility environment. In addition to aircraft 420, of weather radar 402 may be installed in a helicopter, where the output of weather radar 402 may be valuable while landing in blowing dust (brown-out) or blowing snow (white-out) conditions. Weather radar 402 may interleave all approach phase scans and searches with other radar functions described herein.

The radar system operating according to the techniques of this disclosure may not simultaneously receive return signals that were all transmitted at the same time. For example, the high aspect ratio transmission beam may transmit radar signals for a selected azimuth over the entire elevation simultaneously. Radar signals that reflect from more distant objects arrive at the receive array later than radar signals that reflect from closer objects. During post-processing, weather radar 402 may assemble the radar returns from a single chirp, or plurality of chirps, into a coherent picture for a selected azimuth. Weather radar 402 may simultaneously perform sum beam processing to determine, for example weather characteristics, as well as monopulse digital beam forming for navigation, collision avoidance or other functions. As described above in relation to FIGS. 1 - 3, weather radar 402 may output the gathered weather and non-weather information and output data to a HUD configured to receive the data and display symbology on the HUD based on the gathered information from weather radar 402.

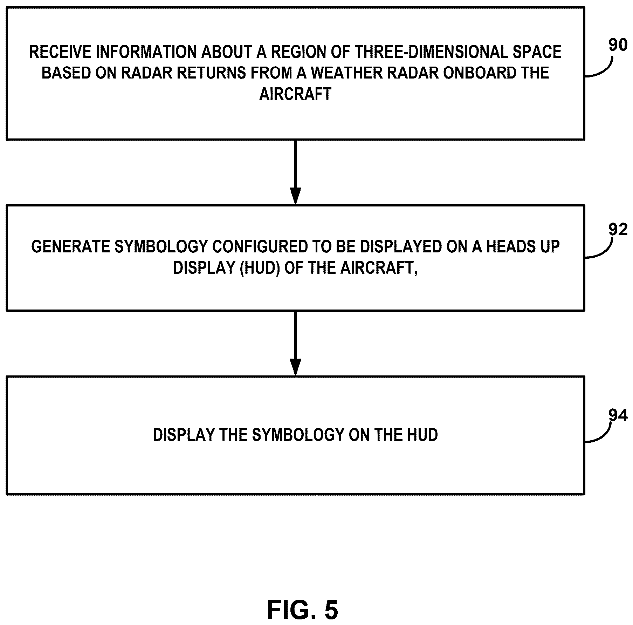

FIG. 5 is a flow chart illustrating an example operation of a system configured to display information on a HUD according to one or more techniques of this disclosure. The steps of FIG. 5 will be described in terms of FIG. 1, unless otherwise noted.

Processing circuit of system 100 may receive information about a region of three-dimensional space based on radar returns from a weather radar onboard an aircraft (90). As described above in relation to FIG. 1, the region of three-dimensional space may include a flight path of the aircraft, or at least the projected flight path of the aircraft. An aircraft may change course based on weather conditions or other hazards and travel through a different region of space than initially received.

In some examples, processing circuitry of weather radar 102, not shown in FIGS. 1 or 5, may receive and analyze the information based on the reflected weather radar returns from targets or from weather phenomena. As described above in relation to FIG. 1, processing circuitry of weather radar 102 may output the received information to the one or both of HUD 104 or look down displays 106 on the aircraft, either directly or via processing circuitry 110 of other avionics 108.

Processing circuitry of system 100 may generate symbology configured to be displayed HUD 104 of the aircraft (92). The symbology for HUD 104 is based on the received information from the weather radar, e.g., weather information or non-weather information. System 100 may then display the symbology on the HUD (94).

Note that any of the steps in FIG. 5 may be executed by any of the processing circuitry of system 100. In some examples, one or more steps may be shared across processing circuitry for different components of system 100. In some examples, processing circuitry for weather radar 102 may execute instructions stored at a memory to analyze the weather radar returns and determine the type, nature, location, future tracking and other information about either weather or non-weather items in the region of 3D space. Weather radar 102 may output the information to other processing circuitry of system 100, e.g., a HUD controller, where the HUD controller, or other avionics 108, generates the symbology based on the received information. In other examples, weather radar 102 may be configured with programming instructions to generate and output the symbology for display on HUD 104 based on the analyzed reflected radar returns.

In one or more examples, the functions described above may be implemented in hardware, software, firmware, or any combination thereof. For example, the various components of FIGS. 1 and 2, such as weather radar 102, avionics 108, processing circuitry 110, HUDs 104 and 202, and look down display 106 may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The techniques of this disclosure may also be described in the following examples.

Example 1: A system comprising a weather radar configured to: gather information about a region of three-dimensional space that includes a flight path of an aircraft; and output the gathered information; a heads up display (HUD) configured to: receive data comprising the gathered information from the weather radar; and display symbology on the HUD based on the gathered information from the weather radar.

Example 2: The system of example 1, wherein the gathered information comprises a location, movement relative to the aircraft, and track prediction for weather phenomena detected by the weather radar.

Example 3: The system of example 2, wherein the weather phenomena comprise one or more of: wind shear, turbulence, a thunderstorm, a gust front, icing conditions, a microburst, lightning inference and downdrafts.

Example 4: The system of any of examples 2 and 3, wherein the display symbology comprises a lead line indicating the track prediction.

Example 5: The system of any of examples 1 through 4, wherein the gathered information comprises a location, movement relative to the aircraft, and track prediction for non-weather hazards detected by the weather radar.

Example 6: The system of example 5, wherein the non-weather hazards comprise one or more of: non-cooperative hazards, and volcanic ash.

Example 7: The system of example 6, wherein the non-cooperative hazards comprise at least one of: unmanned aerial vehicles (UAV), and bird flocks.

Example 8: The system of any of examples 1 through 7, wherein the HUD is further configured to receive user input to adjust the display symbology on the HUD.

Example 9: A non-transitory computer-readable storage medium instructions that, when executed, cause processing circuitry of a computing device to receive information about a region of three-dimensional space, wherein the information is based on radar returns from a weather radar, and wherein the region of three-dimensional space comprising a flight path of an aircraft; generate symbology configured to be displayed on a heads up display (HUD) of the aircraft, wherein the symbology is based on the received information; and display the symbology on the HUD.

Example 10: The non-transitory computer-readable storage medium of example 9, wherein the gathered information comprises a location, movement relative to the aircraft, and track prediction for weather phenomena detected by the weather radar.

Example 11: The non-transitory computer-readable storage medium of example 10, wherein the weather phenomena comprise one or more of: wind shear, turbulence, a thunderstorm, a gust front, icing conditions, a microburst, lightning inference and downdrafts.

Example 12: The non-transitory computer-readable storage medium of any of examples 10 and 11, wherein the display symbology comprises a lead line indicating the track prediction.

Example 13: The non-transitory computer-readable storage medium of any of examples 9 through 12, wherein the gathered information comprises a location, movement relative to the aircraft, and track prediction for non-weather hazards detected by the weather radar.

Example 14: The non-transitory computer-readable storage medium of example 13, wherein the non-weather hazards comprise one or more of: non-cooperative hazards, and volcanic ash.

Example 15: The non-transitory computer-readable storage medium of example 14, wherein the non-cooperative hazards comprise at least one of: unmanned aerial vehicles (UAV), and bird flocks.

Example 16: The non-transitory computer-readable storage medium of any of examples 9 through 15, wherein the HUD is further configured to receive user input to adjust the display symbology on the HUD.

Example 17: A method comprising receiving, by processing circuitry of an aircraft, information about a region of three-dimensional space, wherein the information is based on radar returns from a weather radar onboard the aircraft, and wherein the region of three-dimensional space comprising a flight path of the aircraft; generating, by the processing circuitry, symbology configured to be displayed on a heads up display (HUD) of the aircraft, wherein the symbology is based on the received information; and displaying the symbology on the HUD.

Example 18: The method of example 17, wherein the gathered information comprises a location, movement relative to the aircraft, and track prediction for weather phenomena detected by the weather radar.

Example 19: The method of any of examples 17 and 18, wherein the gathered information comprises a location, movement relative to the aircraft, and track prediction for non-weather hazards detected by the weather radar.

Example 20: The method of example 19, wherein the display symbology comprises a lead line indicating the track prediction. ABSTRACT A system, device and method to generate symbology to display weather and non-weather hazards on the heads up display (HUD) based on information gathered and analyzed by a weather radar. The systems of this disclosure may enable the pilot to gain safety information about weather and non-weather information collected by the weather radar by looking at the HUD rather than switching their attention between look down displays and heads up display.

Various examples of the disclosure have been described. These and other examples are within the scope of the following claims.

## Claims

1. A system comprising:
a weather radar configured to:
gather information about a region of three-dimensional space that includes a flight path of an aircraft; and
output the gathered information;
a heads up display (HUD) configured to:
receive data comprising the gathered information from the weather radar; and
display symbology on the HUD based on the gathered information from the weather radar.

2. The system of claim 1, wherein the gathered information comprises a location, movement relative to the aircraft, and track prediction for weather phenomena detected by the weather radar.

3. The system of claim 2, wherein the weather phenomena comprise one or more of: wind shear, turbulence, a thunderstorm, a gust front, icing conditions, a microburst, lightning inference and downdrafts.

4. The system of claim 2 or 3, wherein the display symbology comprises a lead line indicating the track prediction.

5. The system of any of claims 1-4, wherein the gathered information comprises a location, movement relative to the aircraft, and track prediction for non-weather hazards detected by the weather radar.

6. The system of claim 5, wherein the non-weather hazards comprise one or more of: non-cooperative hazards, and volcanic ash.

7. The system of claim 6, wherein the non-cooperative hazards comprise at least one of: unmanned aerial vehicles (UAV), and bird flocks.

8. The system of any of claims 1-7, wherein the HUD is further configured to receive user input to adjust the display symbology on the HUD.

9. A non-transitory computer-readable storage medium comprising instructions that, when executed, cause processing circuitry of a computing device to:
receive information about a region of three-dimensional space,
wherein the information is based on radar returns from a weather radar, and
wherein the region of three-dimensional space includes a flight path of an aircraft;
generate symbology configured to be displayed on a heads up display (HUD) of the aircraft, wherein the symbology is based on the information; and
display the symbology on the HUD.

10. The non-transitory computer-readable storage medium of claim 9, wherein the information comprises a location, movement relative to the aircraft, and track prediction for weather phenomena detected by the weather radar.

11. The non-transitory computer-readable storage medium of claim 10, wherein the weather phenomena comprise one or more of: wind shear, turbulence, a thunderstorm, a gust front, icing conditions, a microburst, lightning inference and downdrafts.

12. A method comprising:
receiving, by processing circuitry of an aircraft, information about a region of three-dimensional space,
wherein the information is based on radar returns from a weather radar onboard the aircraft, and
wherein the region of three-dimensional space includes a flight path of the aircraft;
generating, by the processing circuitry, symbology configured to be displayed on a heads up display (HUD) of the aircraft, wherein the symbology is based on the information; and
displaying the symbology on the HUD.

13. The method of claim 12, wherein the information comprises a location, movement relative to the aircraft, and track prediction for weather phenomena detected by the weather radar.

14. The method of claim 12, wherein the information comprises a location, movement relative to the aircraft, and track prediction for non-weather hazards detected by the weather radar.

15. The method of claim 14, wherein the display symbology comprises a lead line indicating the track prediction.
